Europäisches Patentamt

European Patent Office

Office européen des brevets

(19)

(11) Numéro de publication : **0 093 042**
**B1**

(12) **FASCICULE DE BREVET EUROPÉEN**

(45) Date de publication du fascicule du brevet :
01.10.86

(51) Int. Cl.⁴ : **B 23 Q 3/08**

(21) Numéro de dépôt : **83400768.4**

(22) Date de dépôt : **19.04.83**

(54) **Dispositif de serrage auto-adaptateur et limiteur de vibrations.**

(30) Priorité : **23.04.82 FR 8206988**

(43) Date de publication de la demande :
**02.11.83 Bulletin 83/44**

(45) Mention de la délivrance du brevet :
**01.10.86 Bulletin 86/40**

(84) Etats contractants désignés :
**AT DE GB IT SE**

(56) Documents cités :
DE-A- 2 148 835
US-A- 2 533 413
US-A- 2 757 391
US-A- 2 932 041
US-A- 3 777 963
IBM TECHNICAL DISCLOSURE BULLETIN, vol. 22,
no. 1, juin 1979, pages 117-118, New York, USA, L.
GLUSMAN et al.: "Self-centering clamping device"

(73) Titulaire : **RENAULT AUTOMATION**
**8/10 avenue Emile Zola**
**F-92109 Boulogne-Billancourt (FR)**

(72) Inventeur : **Marty, Gabriel**
**20, rue Goya**
**F-81100 Castres (FR)**

(74) Mandataire : **Réal, Jacques**
**Régie Nationale des Usines Renault SCE 0804**
**F-92109 Boulogne Billancourt Cedex (FR)**

## Description

La présente invention se rapporte à un dispositif utilisé en association avec des systèmes de maintien de pièces et destiné notamment à limiter les vibrations provoquées par des sollicitations d'usinage discontinues.

La technique actuelle pour limiter de telles vibrations consiste généralement en une précontrainte de la pièce à usiner qui est supérieure aux sollicitations de la pièce, ce qui provoque nécessairement une déformation de cette dernière.

Toutefois, il est connu par le document IBM Technical Disclosure Bulletin Vol. 22, n° 1, June 1979, pages 117 et 118, de maintenir des pièces ou des outils au moyen d'un dispositif de serrage à centrage automatique par tête flottante comportant deux mâchoires identiques commandées séparément de façon pneumatique.

Par ailleurs, le document US-A-2 757 391 décrit un dispositif automatique de serrage et de positionnement de pièces d'usinage pour machine-outil pourvu de deux mâchoires en V qu'un système de leviers à commande fluidique rapproche ou éloigne l'une de l'autre de façon simultanée et égale.

Ces deux dispositifs de serrage ne sont pas du tout associés à des systèmes de maintien de pièces en vue de limiter les vibrations en cours d'usinage. Le premier nécessite de plus deux organes de commande alors que le second ne constitue qu'un étau hydraulique ou pneumatique conventionnel.

La présente invention a pour but principal de résoudre le problème posé par la recherche d'un compromis entre la précontrainte et la déformation de la pièce.

A cet effet, l'invention propose un dispositif pour serrer une partie de pièce préalablement fixée ou positionnée sur un élément de machine, du type comportant un support et deux mâchoires de serrage qui peuvent se déplacer librement par rapport à cette partie de pièce de façon à s'adapter automatiquement à cette dernière par un serrage sans déformation.

Suivant une particularité essentielle de l'invention, les mâchoires de ce dispositif de serrage sont articulées sur un même levier coudé, et constituent un ensemble flottant formé de deux arbres parallèles dont les parties d'extrémité non articulées sont solidaires d'une bride et d'un appui respectivement, et qui coopèrent avec des bagues de guidage respectives du support.

Ce dispositif de serrage permet donc de venir immobiliser la pièce préalablement bridée, dans la position où elle se trouve, sans avoir une course précise à assurer. Il assure un serrage sans déformation suivant deux forces de même intensité et de sens opposés, obtenu avec un seul élément de commande. Ce dispositif flottant vient se localiser sur la pièce avant de se bloquer dans sa position finale dans laquelle il rigidifie la pièce et modifie ainsi les caractéristiques vibratoires de celle-ci.

L'invention est expliquée plus en détails ci-après à l'aide d'un de ses modes de réalisation, puis à titre illustratif mais nullement limitatif, en se référant aux dessins annexés dans lesquels :

la figure 1 est une vue d'ensemble du dispositif de serrage auto-adaptateur et limiteur de vibrations conforme à l'invention ;

la figure 2 est une vue partielle de la figure 1 en coupe suivant AA ;

la figure 3 est une vue partielle de la figure 2 en coupe suivant BB.

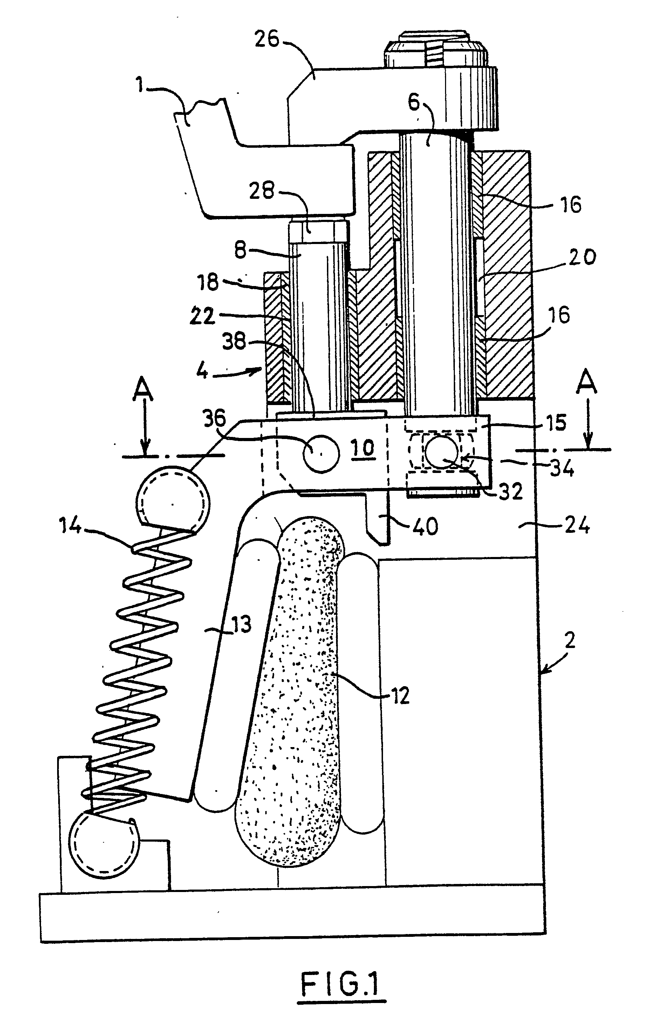

Le dispositif de serrage auto-adaptateur conforme à l'invention et représenté à la figure 1 comprend essentiellement un support 2, un ensemble flottant 4 constitué par deux arbres parallèles 6 et 8 formant mâchoires de serrage et un levier coudé 10.

L'ensemble flottant 4 est relié au support 2 au moyen de bagues de guidage 16 et 18 respectivement logées dans deux alésages traversants 20 et 22 du support 2 et destinées à recevoir respectivement les arbres 6 et 8. Deux ressorts 14 et un vérin à soufflet 12 sont associés à la partie d'extrémité 13 du levier 10. Les arbres 6 et 8 sont articulés d'un côté sur une seconde partie d'extrémité 15 du levier 10, laquelle partie est reçue dans un évidement 24 du support 2, et sont solidaires de l'autre côté, d'une bride 26 et d'un appui 28 respectivement.

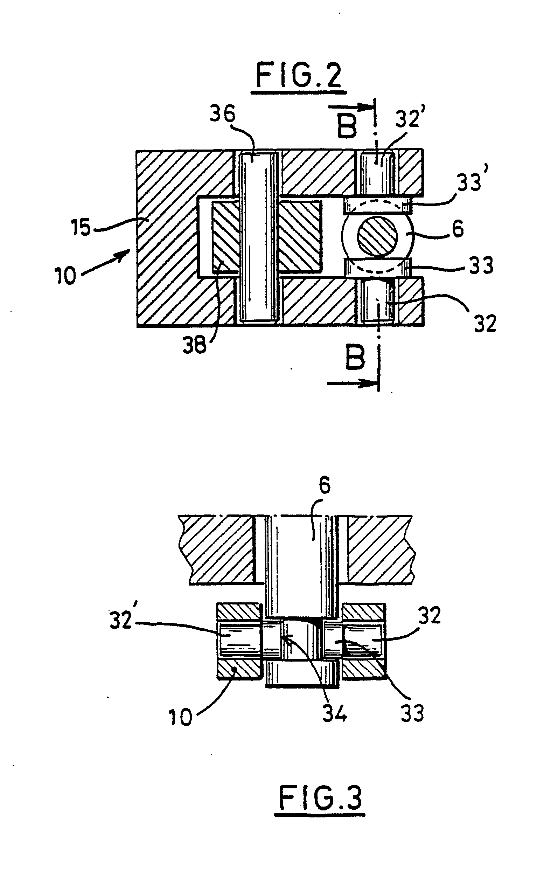

Comme le montrent les figures 2 et 3, la partie d'extrémité 15 du levier 10 se présente sous la forme d'une chape symétrique. L'articulation du levier sur l'arbre 6 comporte deux pions coaxiaux 32, 32' comportant des têtes 33, 33' et tourillonnant dans les branches de la chape 15. Ces pions sont disposés dans une gorge 34 d'une partie d'extrémité de l'arbre 6 et leur axe commun est perpendiculaire à l'axe de l'arbre 6.

L'articulation du levier 10 sur l'arbre 8 est constituée par un axe cylindrique 36 parallèle aux pions 32 et 32'. Cet axe 36 traverse les deux branches de la chape 15 et la partie d'extrémité 38 de l'arbre 8 munie d'un ergot 40 formant butée et logée entre ces branches.

Le dispositif précédemment décrit fonctionne de la manière suivante :

Lorsque le vérin à soufflet 12 est actionné, il agit sur le levier coudé 10 par l'extrémité 13 de celui-ci à l'encontre des ressorts 14. Ce levier 10 pivote autour de l'axe cylindrique 36 et entraîne par sa partie d'extrémité 15 l'arbre 6 vers le bas par l'intermédiaire des pions coaxiaux 32 et 32' qui coulissent par leurs têtes 33 et 33' sur les flancs de la gorge 34. A ce moment l'arbre 8 amorce son mouvement vers le haut pour venir de même en contact avec la pièce 1 par l'appui 28. L'ensemble flottant 4 est ainsi immobilisé en butée sur la pièce à usiner, le vérin à soufflet 12 tend ensuite à coucher l'arbre 8 dans sa bague de guidage 18 en occasionnant dans celle-ci une force de frottement très importante. De même, la bride 26 produit le même effet.

Dans cette configuration, l'ensemble flottant 4 est en équilibre et bloqué. Cet ensemble lie rigidement la pièce à usiner 1 au support 2, ce qui permet de limiter dans une large mesure les vibrations occasionnées par les sollicitations discontinues dues à l'usinage.

Pour libérer l'ensemble flottant 4, il suffit de relâcher l'effort exercé par le vérin à soufflet 12. Les ressorts 14 repoussent ce vérin. Le levier 10 abaisse l'arbre 8 par l'intermédiaire de l'axe cylindrique 36. L'ergot 40, qui peut être remplacé par une butée solidaire du support 2, vient en butée contre le support 2.

Le levier 10 soulève alors l'arbre 6 et la bride 26 par l'intermédiaire des pions 32 et 32' qui coulissent par leurs têtes 33 et 33' sur les flancs de la gorge 34.

L'arbre 6 peut être libre en rotation de manière à ce que l'on puisse escamoter la bride 26 par une commande appropriée.

L'invention n'est pas bien entendu limitée à l'emploi d'un type particulier de vérin de commande ; celui-ci peut être remplacé par tout autre moyen permettant d'exercer le même effort.

## Revendications

1. Dispositif pour serrer une partie de pièce (1) préalablement fixée, du type comportant un support (2) et deux mâchoires de serrage (6, 26 ; 8, 28) qui peuvent se déplacer librement par rapport à ladite partie de pièce de façon à s'adapter automatiquement à cette dernière par un serrage sans déformation, quelle que soit l'orientation de cette partie de pièce, caractérisé en ce que lesdites mâchoires articulées sur un même levier coudé (10) constituent un ensemble flottant (4) formé de deux arbres parallèles (6) et (8) dont les parties d'extrémité non articulées sont solidaires d'une bride (26) et d'un appui (28) respectivement, et qui coopèrent avec des bagues de guidage respectives (16, 18) du support (2

2. Dispositif selon la revendication 1, caractérisé en ce que la partie d'extrémité (15) du levier coudé (10) sur laquelle s'articulent lesdites mâchoires de serrage, se présente sous la forme d'une chape symétrique dont les branches sont traversées par deux axes d'articulation parallèles constitués respectivement par un axe cylindrique (36) et deux pions coaxiaux (32) et (32').

3. Dispositif suivant la revendication 2, caractérisé en ce que l'autre partie d'extrémité (13) du levier coudé (10) est reliée au support (2) par l'intermédiaire de deux ressorts (14) et d'un vérin de commande tel qu'un vérin à soufflet (12).

## Claims

1. Apparatus for gripping a previously fixed component portion (1), of the type comprising a support (2) and two gripping jaws (6, 26 ; 8, 28) which can move freely with respect to said component portion in order automatically to adapt thereto by gripping without deformation, irrespective of the orientation of said component portion, characterised in that said jaws which are pivotally mounted on the same elbow lever (10) constitute a floating assembly (4) formed by two parallel shafts (6 and 8), the non-pivoted end portions of which are fixed with respect to a clamp member (26) and a support member (28) respectively, and which co-operate with respective guide rings (16, 18) of the support (2).

2. Apparatus according to claim 1 characterised in that the end portion (15) of the elbow lever (10) on which said gripping jaws are pivoted is in the form of a symmetrical fork, through the limbs of which pass two parallel pivot axis members formed respectively by a cylindrical spindle (36) and two coaxial pins (32) and (32').

3. Apparatus according to claim 2 characterised in that the other end portion (13) of the elbow lever (10) is connected to the support (2) by way of two springs (14) and an actuating jack such as a bellows-type jack (12).

## Patentansprüche

1. Vorrichtung zum Spannen eines Werkzeugteils (1), das vorher festgelegt wurde, mit einer Halterung (2) und zwei Spannbacken (6, 26 ; 8, 28), die derart frei verschiebbar sind bezüglich des Werkstückteils, daß sie sich automatisch an dieses anpassen zum Einspannen ohne Verformung bei beliebiger Ausrichtung des Werkstückteils, dadurch gekennzeichnet, daß die an ein- und denselben gekrümmten Hebel (10) angelenkten Backen einen beweglichen Aufbau (4) bilden, der aus zwei parallelen Wellen (6 und 8) besteht, deren nicht angelenkte Endstücke mit einem Bügel (26) bzw. einem Stützteil (28) verbunden sind und die mit entsprechenden Führungsringen (16, 18) der Halterung (2) zusammenwirken.

2. Vorrichtung nach Anspruch 1, dadurch gekennzeichnet, daß die Endstücke (15) des gekrümmten Hebels (10), an denen die Klemmbacken angelenkt sind, die Form eines symmetrischen Gabelbügels aufweisen, dessen Arme von zwei parallelen Gelenkachsen durchsetzt sind, die aus einer zylindrischen Achse (36) und zwei koaxialen Stiften (32 und 32') bestehen.

3. Vorrichtung nach Anspruch 2, dadurch gekennzeichnet, daß das andere Endstück (13) des gekrümmten Hebels (10) mit der Halterung (2) über zwei Federn (14) und einer steuerbaren Druckvorrichtung, z. B. einer aufblasbaren Druckvorrichtung (12), verbunden ist.

F I G.1

## FIG.2

## FIG.3